# EUROPEAN PATENT SPECIFICATION

(11) **EP 2 726 271 B1**
(45) Date of publication and mention of the grant of the patent: **05.09.2018**
(21) Application number: 11729619.4
(22) Date of filing: 01.07.2011
(51) Int. Cl.: B29C 65/78, B29C 65/00, B29C 65/48, F16B 11/00, B29L 31/30

(54) **ASSEMBLY AND ASSEMBLY METHOD**
ANORDNUNG UND MONTAGEVERFAHREN
ENSEMBLE ET PROCÉDÉ D'ASSEMBLAGE

(43) Date of publication of application: 07.05.2014
(73) Proprietor: Toyota Motor Europe, 1140 Brussels (BE)
(72) Inventor: MARCHETTA, Federico, B-1030 Schaerbeek (BE)
(74) Representative: Intès, Didier Gérard André
(86) International application number: PCT/EP2011/061160
(87) International publication number: WO 2013/004279

(56) References cited:
- WO-A1-02/102646
- WO-A1-2006/091794
- WO-A2-2004/074026
- DE-A1- 3 602 293

## Description

### TECHNICAL FIELD

The present disclosure relates to an assembly method for assembling at least a first part to a second part, as well as to said first and second parts and the assembly thereof.

### BACKGROUND

In most assembly methods, as for example disclosed in WO 2006/091794 A, especially automated assembly methods, it is usually important to maintain a correct alignment between the parts to be assembled. This is particularly important for the assembly of apparent parts, such as for example car body parts, since any visible joints between the parts may detract from the perceived quality. Moreover, when said assembly method involves a bonding step, such a misalignment between the corresponding bonding surfaces of the two parts may prevent an adequate bond between the parts. As a result, the production of the parts to be assembled may require close manufacturing tolerances, which could be difficult to ensure with affordable production methods. For instance, molded parts may be warped by internal stresses beyond those manufacturing tolerances upon extraction from the mold, disturbing the required alignment of the parts.

### SUMMARY

A first object of this disclosure is that of providing an assembly method for assembling at least a first part and a second part, each one of said first and second parts comprising at least a first bonding lip with a bonding surface, wherein the correct alignment of the two parts with respect to each other is ensured, even if comparatively broad tolerances apply to the position of one or both first bonding lips. Manufacturing cost and complexity can thus be reduced.

Accordingly, in at least one illustrative embodiment, the method comprises the steps according to claim 1

By "oblique" it is understood, in the present context, that the front face of the guiding lip is in a plane which intersects a plane of the bonding surface of the first bonding lip at an acute angle.

Consequently, the use of the guiding lip in this method helps to correct the alignment of the corresponding bonding surfaces of the first and second parts with respect to each other, even in case of a substantial initial misalignment.

In particular, said guiding lip may present a stiffening rib, which moreover may be substantially oriented in the insertion direction and perpendicularly to the oblique front face, and located in a rear face of the guiding lip, opposite to said front face. This stiffening rib stiffens the guiding lip against the pressure with which the bonding lip of the second part engages its oblique front face, ensuring thus a more accurate positioning of the two parts during the closing step, and a higher pressure between the corresponding bonding surfaces during the bonding step, even with reduced material thickness at the guiding lip.

Moreover, the first bonding lip of the second part may also present a stiffening rib. Apart from strengthening the first bonding lip of the second part against the pressure with which it engages the oblique front face of the guiding lip, this stiffening rib may also enlarge the contact area of the first bonding lip of the second part with the oblique front face of the guiding lip and thus improve the alignment between the two parts.

Furthermore, the first bonding lip of the second part may present a tapered leading edge, so as to increase the contact surface with the oblique front face of the guiding lip during the closing step. In particular, if this first bonding lip of the second part presents a stiffening rib facing the guiding lip, the leading edge of this stiffening rib may be tapered to increase its contact surface with the oblique front face of the guiding lip.

In at least one particular embodiment, the second part presents a cross-section with at least a first leg and a second leg, linked at respective proximal ends, the first bonding lip of the second part being located at a distal end of the first leg. In said closing step, the first part then closes a gap between the distal end of the first leg and a distal end of the second leg. In this case, the bonding surface of said first bonding lip of the second part may face outwardly, that is, away from the second leg and towards an inward-facing bonding surface of the first bonding lip of the first part, and the guiding lip may then protrude from said first leg inwardly, that is, in direction of the second leg.

When the first and second parts are being joined, the bonding surface of the bonding lip of the first leg is then pushed outwardly against the inward-facing bonding surface of a bonding lip of the first part by the oblique front face of said guiding lip, which engages a leading edge of the bonding lip of the first leg of the second part. In particular, the cross-section of said second part may be C-shaped. This assembly method thus provides a reliable assembly of a lid-like first part onto a hollow second part.

In particular, said first and second legs are pulled outwardly during the joining step, for instance by suction on respective outer faces. For this purpose, said second part may be received in a vacuum jig. If the second part is a polymer part produced by a molding process, this pull has the purpose of counteracting a deformation of the second part, caused by its internal stresses after extraction from its mold, and bringing the distal ends of the two legs towards each other. With an outwards pull, both legs of the second part can be more accurately positioned with respect to the first part for bonding.

In particular, during said closing step, a bonding surface of a second bonding lip of the second part, located at the distal end of the second leg and facing inwardly, that is, towards the first leg, may also close against an outward-facing bonding surface of a second bonding lip of the first part. In this manner the engagement of the oblique front face of the guiding lip with the first bonding lip of the second part not only pushes the first bonding lip of the second part against the corresponding first bonding lip of the first part, but can also push the second bonding lip of the first part against the corresponding second bonding lip of the second part, thus simultaneously ensuring the correct positioning and bonding of both pairs of corresponding bonding lips.

In particular, the bonding step may be performed using an adhesive. However, other bonding processes, such as, for example, thermal bonding, may be used alternatively to, or in combination with, the use of an adhesive. If an adhesive is used, at least one bonding surface may be advantageously recessed for receiving the adhesive.

In particular, the first part and/or the second part may be made at least partially of a polymer material, such as, for instance, a thermoplastic polymer, by molding, for example. However, other materials and/or shaping processes may be considered alternatively to, or in combination with, this material and process.

Another object of this disclosure is that of providing a first part for assembly with a second part, using in particular the abovementioned assembly method. Accordingly, in at least one embodiment, this first part thus comprises at least a first bonding lip with a bonding surface, and a guiding lip, protruding from a base of said first bonding lip and presenting a front face obliquely opposed to said bonding surface.

Another object of this disclosure is that of providing an assembly of such a first part and a second part comprising at least a first bonding lip, inserted between the first bonding lip and the guiding lip of the first part, and also presenting a bonding surface, which is bonded to the bonding surface of the first bonding lip of the first part.

### BRIEF DESCRIPTION OF THE DRAWINGS

The invention may be more completely understood in consideration of the following detailed description of an embodiment in connection with the accompanying drawings, in which:
- FIG. 1 is a schematic cross-section of a prior art bonded two-part assembly;
- FIG. 2 is a schematic cross-section of a bonded two-part assembly according to an embodiment of the invention ; and
- FIGS. 3, 4, 5 and 6 show an assembly sequence of the bonded two-part assembly of FIG. 2.

While the invention is amenable to various modifications and alternative forms, specifics thereof have been shown by way of example in the drawings and will be described in detail. It should be understood, however, that the intention is not to limit aspects of the invention to the particular embodiment described. On the contrary, the intention is to cover all modifications, equivalents, and alternatives falling within the scope of the invention, which are defined by the claims.

### DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

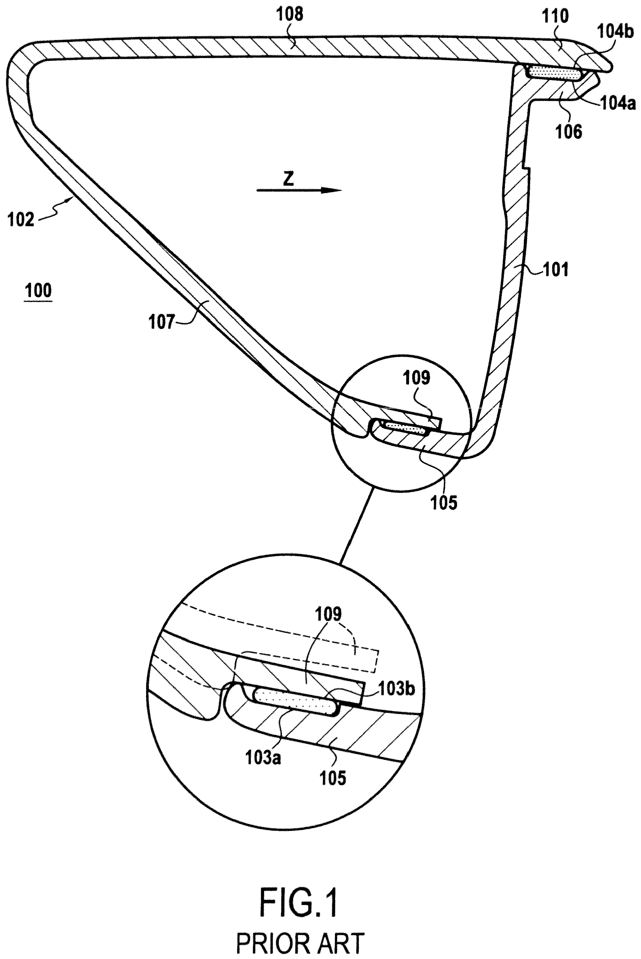

FIG. 1 illustrates a two-part bonded assembly 100 in which a first part 101 comprises a first bonding lip 105 with an inward-facing bonding surface 103a and a second bonding lip 106 with an outward-facing bonding surface 104a, and in which the second part 102 presents a C-shaped cross-section, with a first leg 107 and a second leg 108, joined at respective proximal ends, and comprising, at a distal end of the first leg 107, a first bonding lip 109 with an outward-facing bonding surface 103b and, at a distal end of the second leg 108, a second bonding lip 110 with an inward facing bonding surface 104b. The bonding surfaces 103a, 103b, 104a and 104b are substantially aligned with the Z axis.

The purpose of the first part 101 is to close the gap between the first and second legs 107, 108 of the second part 102. For this, the inward-facing bonding surface 103a is bonded with the outward-facing bonding surface 103b, and the outward-facing bonding surface 104a with the corresponding inward-facing bonding surface 104b.

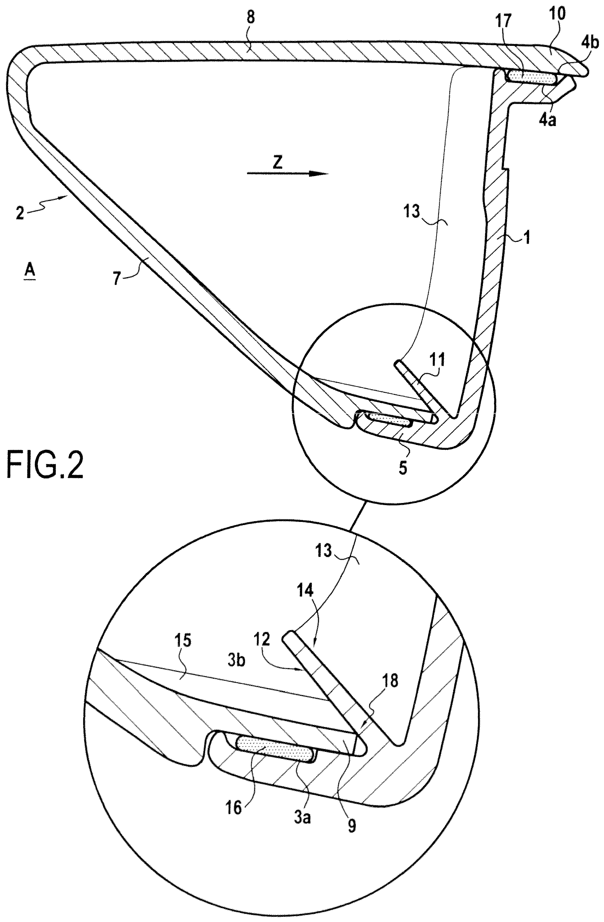

This prior art configuration, however, presents some significant drawbacks. Firstly, if the second part 102 is produced by molding, and in particular by injection molding of a polymer material, its internal stresses may warp it when it is extracted from its mold, as shown by the dotted line in FIG. 2, drawing the two legs 107 and 108 together, so that their first and second bonding surfaces 103b, 104b can no longer close against both corresponding bonding surfaces 103a, 104a of the first part 101. Moreover, even when the alignment is correct, it is difficult to exert a simultaneous pressure on both pairs of corresponding bonding surfaces when the two parts 101 and 102 are brought together and bonded, even with a correct alignment of the corresponding bonding surfaces. As a result, the bond strength and correct relative positioning of the two parts 101, 102 may be compromised.

FIG. 2 and 2A illustrate a bonded two-part assembly A, according to an embodiment of the invention, which addresses these drawbacks. Like the prior-art assembly 200 of FIG. 2, this assembly A has a first part 1 and a second part 2, both produced, from a thermoplastic polymer material, by injection molding. The first part 2 also comprises a first bonding lip 5 with an inward-facing bonding surface 3a and a second bonding lip 6 with an outward-facing bonding surface 4a, and the second part 2 also presents a C-shaped cross-section, with a first leg 7 and a second leg 8, joined at respective proximal ends, and comprising, at a distal end of the first leg 7, a first bonding lip 9 with an outward-facing bonding surface 3b and, at a distal end of the second leg 8, a second bonding lip 10 with an inward-facing bonding surface 4b. The bonding surfaces 3a, 3b, 4a and 4b are also substantially aligned with the direction Z. Bonding surfaces 3a and 4a of the first part 1 are recessed to accommodate respective glue beads 16 and 17.

In addition, the first part 1 also comprises, protruding inwardly from the root of its first bonding lip 5, a guiding lip 11 with an oblique front face 12. This guiding lip 11 is stiffened by a stiffening rib 13 which extends, from its rear face 14, in a plane substantially aligned with the Z axis and perpendicular to the front face 12. The first bonding lip 9 of the second part 2 also presents, at an opposite side from its bonding surface 3b, a rib 15. The oblique front face 12 of the guiding lip 11 contacts the leading edge of the first bonding lip 9 of the second part 2 and a tapered leading edge 18 of the rib 15, acting thus as a wedge pushing the outward-facing bonding surface 3b of the first bonding lip 9 of the second part 2 against the corresponding inward-facing bonding surface 3a of the first bonding lip 5 of the first part 1, when the first part 1 and the second part 2 are held together in direction of the axis Z. Incidentally, this pressure and the guiding lip 11 also simultaneously push the inward-facing bonding surface 4b of the second bonding lip 10 of the second part 2 against the outward-facing bonding surface 4a of the second bonding lip 6 of the first part 1.

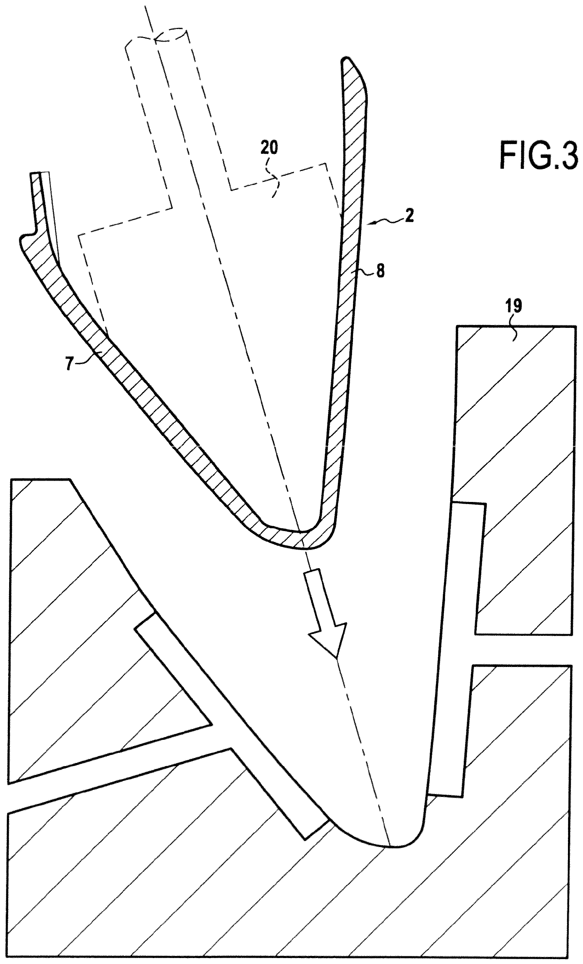

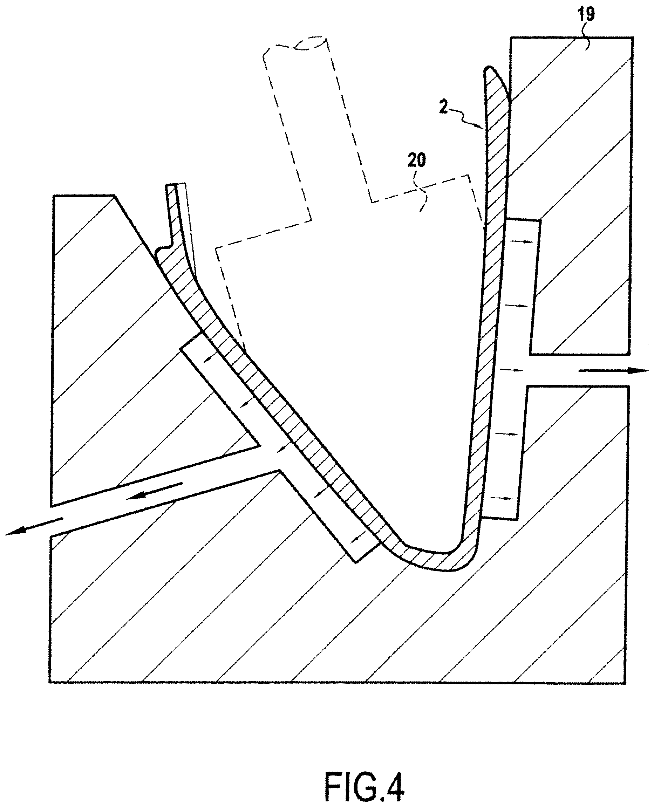

The assembly method for assembling the first part 1 to the second part 2 is shown in FIGS. 3 to 6. In a first step, the second part 2, held in its nominal shape by a tool 20, is received in a vacuum jig 19, as shown in FIG. 3. In order to maintain said nominal shape and prevent that the second part 2 springs back to a deformed shape, the vacuum rig 19 is activated with the tool 20 still in place, so as to hold apart the first and second legs 7 and 8 of the second part 2 by suction once the first tool 20 is removed, as shown in FIG. 4.

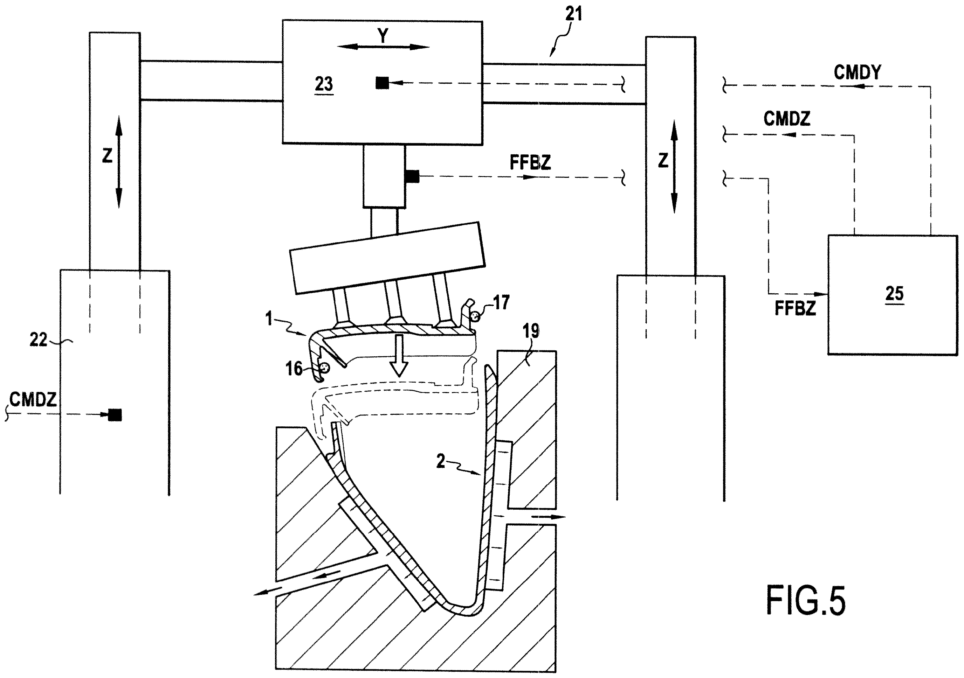

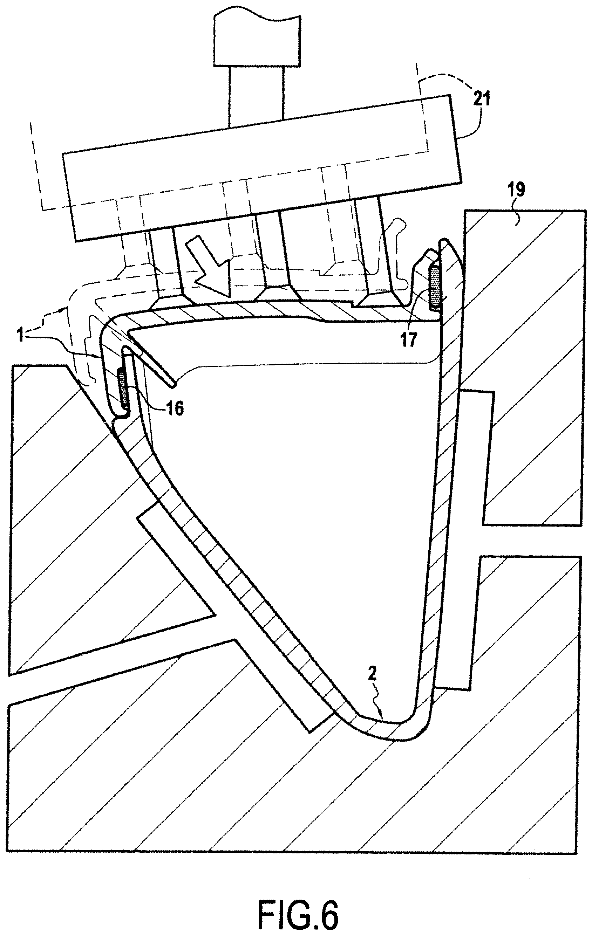

Subsequently, a robot 21 brings the first part 1, with glue beads 16 and 17 in its recessed bonding surfaces 3a, 4a, towards the second part 2, so that the leading edge of the first bonding lip 9 of the second part 2 enters the gap between inward bonding surface 3a of the first bonding lip 5 of the first part 1 and the oblique front face 12 of the guiding lip 11, as shown in FIG. 5. The robot 21 comprises at least a first actuator 22 for movement in the Z axis, a second actuator 23 for movement in the Y axis, orthogonally to the Y axis, a force sensor 24 for sensing the force in the Z axis, and a control unit 25 connected with the actuators 22 and 23 and with the force sensor 24. To approach the first part 1 towards the second part 2, the control unit 25 emits a CMDZ signal towards the first actuator 22, so as to drive a movement of the robot 21 in the Z axis. When the leading edge of the first bonding lip 9 of the second part 2 contacts the oblique front face 12 of the guiding lip 11, the force sensor 24 emits a force feedback signal FFBZ towards the control unit 25. When this force feedback signal FFBZ reaches a predetermined first threshold, control unit 25 shifts to a second mode in which, simultaneously to the CMDZ signal, it also emits a CMDY signal towards second actuator 23, so as to drive a diagonal movement of the robot 21 in both the Y and Z axes, following the oblique front face 12 of the guiding lip 11, towards the closed position shown in FIG. 6, in which the pairs of corresponding bonding surfaces 3a, 3b and 4a, 4b, are closed.

In this closed position, the force feedback signal FFBZ will rise again, and, when it reaches a predetermined second threshold, the control unit 25 will shift to a third mode, in which it stops movement of both actuators 22 and 23. In this step, the robot 21 holds together the first and second part 1 and 2, and the pairs of corresponding bonding surfaces 3a, 3b and 4a, 4b, with a force at least in the Y axis, while the adhesive from the glue beads 16 and 17 hardens. After a predetermined bonding time, the first part 1 is separated from the robot 21, and the control unit 25 commands the actuators 22 and 23 to withdraw the robot 21 from the assembly A. At the end of this assembly process, the two parts 1 and 2 are reliably bonded to each other through the two pairs of bonding surfaces.

Those skilled in the art will recognize that the present invention may be manifested in a variety of forms other than the specific embodiment described and contemplated herein.

For instance, instead of actively commanding a movement of the first part in both the Y and Z axes, the first part and/or the second part may be supported with some play in the Y axis, so that, upon contact of the guiding lip of the first part with the first bonding lip of the second part and under pressure in the direction of the Z axis, the two parts will glide with respect to each other in the direction of the Y axis, until the corresponding bonding surfaces close against each other.

Even if the robot is pictured as a portal-type robot, other types of robot, such as, for instance, an articulated manipulator arm robot may be used instead. Moreover, rather than using a robot or any other automated assembly device, the assembly of the first and second part may also be performed manually

Also, even if in the illustrated embodiment the two parts are bonded with adhesive, thermal bonding can also be considered, especially if one or both parts are thermoplastic. Furthermore, while in the illustrated embodiment both parts are made of a polymer material by molding, alternative materials and production processes can also be considered for one or both of these parts. Additionally, while this method has been described in detail for the assembly of two parts, it can also be used for the assembly of three or more parts in an analogous manner.

In a particular alternative, the parts to be assembled by bonding at least one pair of corresponding bonding surfaces may not be separated and distinct from each other, as in the illustrated embodiment, but hinged to each other along a common edge.

Accordingly, departure in form and detail may be made without departing from the scope of the present invention as described in the appended claims.

## Claims

1. Assembly method for assembling at least a first part (1) and a second part (2), each one of said first and second parts (1,2) comprising at least a first bonding lip (5,9) with a bonding surface (3a,3b), wherein the second part (2) presents a cross-section with at least a first leg (7) and a second leg (8), linked at respective proximal ends, the first bonding lip (9) of the second part (2) being located at a distal end of the first leg (7), the method being **characterized by** the steps of:
inserting the first bonding lip (9) of the second part (2) between the first bonding lip (5) and a guiding lip (11) of the first part (1) until engaging an oblique front face (12) of the guiding lip (11);
closing the bonding surface (3b) of the first bonding lip (9) of the second part (2) against the bonding surface (3a) of the first bonding lip (5) of the first part (1), wherein the first bonding lip (9) of the second part (2) is guided towards the first bonding lip (5) of the first part (1) by the oblique front face (12) of said guiding lip (11), and the first part (1) closes a gap between the distal end of the first leg (7) and a distal end of the second leg (8); and
bonding the bonding surface (3a) of the first bonding lip (5) of the first part (1) to the bonding surface (3b) of the first bonding lip (9) of the second part (2); and
wherein said first and second legs are pulled apart during at least the insertion step.

2. Assembly method according to claim 1, wherein said first and second legs are pulled apart by suction on respective outer faces.

3. Assembly method according to any one of claims 1 or 2, wherein the bonding surface (3a) of said first bonding lip (5) of the first part (1) faces inwards, the bonding surface (3b) of said first bonding lip (9) of the second part (2) faces outwards, and the guiding lip (11) protrudes inwardly from said first part (1).

4. Assembly method according to any one of claims 1 to 3, wherein, during said closing step, a bonding surface (4b) of a second bonding lip (10) of the second part (2), located at the distal end of the second leg (8), also closes against a bonding surface (4a) of a second bonding lip (6) of the first part (1).

5. Assembly method according to any one of claims 1 to 4, wherein said guiding lip (11) has a stiffening rib (13).

6. Assembly method according to claim 5, wherein said stiffening rib (13) of the guiding lip (11) is substantially oriented in a plane perpendicular to the bonding surface (3a) of the first bonding lip (5) of the first part (1) and also to the oblique front face (12) of the guiding lip (11).

7. Assembly method according to any one of claims 5 or 6, wherein said stiffening rib (13) of the guiding lip (11) is adjacent to a rear face of the guiding lip (11), at an opposite side to said oblique front face (12).

8. Assembly method according to any one of the previous claims, wherein said first bonding lip (9) of the second part (2) also comprises a stiffening rib (15).

9. Assembly method according to claim 8, wherein said stiffening rib (15) is in contact with the oblique front face (12) of said guiding lip (11) of the first part (1).

10. Assembly method according to any one of claims 1 to 9, wherein the cross-section of the second part is C-shaped.

11. Assembly method according to any one of claims 1 to 10, wherein said first and second parts (1,2) are bonded by an adhesive.

12. Assembly method according to any one of claims 1 to 11, wherein the first and/or the second part (1,2) are made at least partially of a polymer material.

## Patentansprüche

1. Montageverfahren zum Montieren zumindest eines ersten Teils (1) und eines zweiten Teils (2), wobei jedes der ersten und zweiten Teile (1, 2) zumindest eine erste Verbindungslippe (5, 9) mit einer Verbindungsfläche (3a, 3b) umfasst, wobei das zweite Teil (2) einen Querschnitt mit zumindest einem ersten Schenkel (7) und einem zweiten Schenkel (8) besitzt, die an entsprechenden proximalen Enden verbunden sind, wobei die erste Verbindungslippe (9) des zweiten Teils (2) an einem distalen Ende des ersten Schenkels (7) gelegen ist, wobei das Verfahren **dadurch gekennzeichnet ist, dass** es die Schritte umfasst:
Einfügen der ersten Verbindungslippe (9) des zweiten Teils (2) zwischen die erste Verbindungslippe (5) und eine Führungslippe (11) des ersten Teils (1), bis es eine schräge Stirnfläche (12) der Führungslippe (11) belegt,
Schließen der Verbindungsfläche (3b) der ersten Verbindungslippe (9) des zweiten Teils (2) gegen die Verbindungsfläche (3a) der ersten Verbindungslippe (5) des ersten Teils (1), wobei die erste Verbindungslippe (9) des zweiten Teils (2) von der schrägen Stirnfläche (12) der Führungslippe (11) hin zur ersten Verbindungslippe (5) des ersten Teils (1) geführt wird und das erste Teil (1) einen Spalt zwischen dem distalen Ende des ersten Schenkels (7) und einem distalen Ende des zweiten Schenkels (8) schließt, und
Verbinden der Verbindungsfläche (3a) der ersten Verbindungslippe (5) des ersten Teils (1) mit der Verbindungsfläche (3b) der ersten Verbindungslippe (9) des zweiten Teils (2), und
wobei die ersten und zweiten Schenkel während des Einfügungsschritts auseinandergezogen werden.

2. Montageverfahren nach Anspruch 1, wobei die ersten und zweiten Schenkel durch einen Sog an jeweiligen Außenflächen auseinandergezogen werden.

3. Montageverfahren nach einem der Ansprüche 1 oder 2, wobei die Verbindungsfläche (3a) der ersten Verbindungslippe (5) des ersten Teils (1) nach innen zeigt, die Verbindungsfläche (3b) der ersten Verbindungslippe (9) des zweiten Teils (2) nach außen zeigt und die Führungslippe (11) vom ersten Teil (1) nach innen ragt.

4. Montageverfahren nach einem der Ansprüche 1 bis 3, wobei während des Verschlussschritts eine Verbindungsfläche (4b) einer zweiten Verbindungslippe (10) des zweiten Teils (2), die beim distalen Ende des zweiten Schenkels (8) gelegen ist, auch gegen eine Verbindungsfläche (4a) einer zweiten Verbindungslippe (6) des ersten Teils (1) schließt.

5. Montageverfahren nach einem der Ansprüche 1 bis 4, wobei die Führungslippe (11) eine Versteifungsrippe (13) hat.

6. Montageverfahren nach Anspruch 5, wobei die Versteifungsrippe (13) der Führungslippe (11) im Wesentlichen in einer Ebene rechtwinklig zur Verbindungsfläche (3a) der ersten Verbindungslippe (5) des ersten Teils (1) und auch zur schrägen Stirnfläche (12) der Führungslippe (11) ausgerichtet ist.

7. Montageverfahren nach einem der Ansprüche 5 oder 6, wobei die Versteifungsrippe (13) der Führungslippe (11) an einer der schrägen Stirnfläche (12) entgegengesetzten Seite an eine Rückfläche der Führungslippe (11) angrenzt.

8. Montageverfahren nach einem der vorangehenden Ansprüche, wobei die erste Verbindungslippe (9) des zweiten Teils (2) ebenfalls eine Versteifungsrippe (15) umfasst.

9. Montageverfahren nach Anspruch 8, wobei die Versteifungsrippe (15) mit der schrägen Stirnfläche (12) der Führungslippe (11) des ersten Teils (1) in Kontakt ist.

10. Montageverfahren nach einem der Ansprüche 1 bis 9, wobei der Querschnitt des zweiten Teils C-förmig ist.

11. Montageverfahren nach einem der Ansprüche 1 bis 10, wobei die ersten und zweiten Teile (1, 2) durch einen Kleber verbunden sind.

12. Montageverfahren nach einem der Ansprüche 1 bis 11, wobei das erste und/oder das zweite Teil (1, 2) zumindest teilweise aus einem Polymermaterial bestehen.

## Revendications

1. Procédé d'assemblage pour l'assemblage d'au moins une première partie (1) et une deuxième partie (2), chacune desdites première et deuxième parties (1, 2) comportant au moins une première lèvre de liaison (5, 9) avec une surface de liaison (3a, 3b), selon lequel la deuxième partie (2) présente une section transversale avec au moins une première patte (7) et une deuxième patte (8), liées au niveau d'extrémités proximales respectives, la première lèvre de liaison (9) de la deuxième partie (2) étant située au niveau d'une extrémité distale de la première patte (7), le procédé étant **caractérisé en ce qu'**il comporte les étapes de :
insertion de la première lèvre de liaison (9) de la deuxième partie (2) entre la première lèvre de liaison (5) et une lèvre de guidage (11) de la première partie (1) jusqu'à l'engagement d'une face avant oblique (12) de la lèvre de guidage (11) ;
fermeture de la surface de liaison (3b) de la première lèvre de liaison (9) de la deuxième partie (2) contre la surface de liaison (3a) de la première lèvre de liaison (5) de la première partie (1), selon lequel la première lèvre de liaison (9) de la deuxième partie (2) est guidée vers la première lèvre de liaison (5) de la première partie (1) par la face avant oblique (12) de ladite lèvre de guidage (11), et la première partie (1) ferme un espace entre l'extrémité distale de la première patte (7) et une extrémité distale de la deuxième patte (8) ; et
liaison de la surface de liaison (3a) de la première lèvre de liaison (5) de la première partie (1) à la surface de liaison (3b) de la première lèvre de liaison (9) de la deuxième partie (2) ; et
selon lequel lesdites première et deuxième pattes sont écartées pendant au moins l'étape d'insertion.

2. Procédé d'assemblage selon la revendication 1, selon lequel lesdites première et deuxième pattes sont écartées par aspiration sur des faces extérieures respectives.

3. Procédé d'assemblage selon l'une quelconque des revendications 1 ou 2, selon lequel la surface de liaison (3a) de ladite première lèvre de liaison (5) de la première partie (1) fait face vers l'intérieur, la surface de liaison (3b) de ladite première lèvre de liaison (9) de la deuxième partie (2) fait face vers l'extérieur, et la lèvre de guidage (11) dépasse vers l'intérieur depuis ladite première partie (1).

4. Procédé d'assemblage selon l'une quelconque des revendications 1 à 3, selon lequel, pendant ladite étape de fermeture, une surface de liaison (4b) d'une deuxième lèvre de liaison (10) de la deuxième partie (2), située au niveau de l'extrémité distale de la deuxième patte (8), se ferme également contre une surface de liaison (4a) d'une deuxième lèvre de liaison (6) de la première partie (1).

5. Procédé d'assemblage selon l'une quelconque des revendications 1 à 4, selon lequel ladite lèvre de guidage (11) a une nervure de raidissement (13).

6. Procédé d'assemblage selon la revendication 5, selon lequel ladite nervure de raidissement (13) de la lèvre de guidage (11) est sensiblement orientée dans un plan perpendiculaire à la surface de liaison (3a) de la première lèvre de liaison (5) de la première partie (1) et également à la face avant oblique (12) de la lèvre de guidage (11).

7. Procédé d'assemblage selon l'une quelconque des revendications 5 ou 6, selon lequel ladite nervure de raidissement (13) de la lèvre de guidage (11) est adjacente à une face arrière de la lèvre de guidage (11), sur un côté opposé à ladite face avant oblique (12).

8. Procédé d'assemblage selon l'une quelconque des revendications précédentes, selon lequel ladite première lèvre de liaison (9) de la deuxième partie (2) comporte également une nervure de raidissement (15).

9. Procédé d'assemblage selon la revendication 8, selon lequel ladite nervure de raidissement (15) est en contact avec la face avant oblique (12) de ladite lèvre de guidage (11) de la première partie (1).

10. Procédé d'assemblage selon l'une quelconque des revendications 1 à 9, selon lequel la section transversale de la deuxième partie est en forme de C.

11. Procédé d'assemblage selon l'une quelconque des revendications 1 à 10, selon lequel lesdites première et deuxième parties (1, 2) sont liées par un adhésif.

12. Procédé d'assemblage selon l'une quelconque des revendications 1 à 11, selon lequel la première et/ou la deuxième partie (1, 2) sont fabriquées au moins partiellement dans une matière polymère.
